Europäisches Patentamt

European Patent Office

Office européen des brevets

(19)

(11) EP 1 561 531 A1

## (12) EUROPEAN PATENT APPLICATION
published in accordance with Art. 158(3) EPC

(43) Date of publication:
10.08.2005 Bulletin 2005/32

(51) Int Cl.7: **B22F 9/24**

(21) Application number: 03758782.1

(86) International application number:
PCT/JP2003/013491

(22) Date of filing: 22.10.2003

(87) International publication number:
WO 2004/037470 (06.05.2004 Gazette 2004/19)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 22.10.2002 JP 2002306725

(71) Applicant: Cabot Supermetals K.K.
Tokyo 105-0002 (JP)

(72) Inventors:
• KATAOKA,Eiji
Cabot Supermetals 111,AzaNagayachi
Kawanuma-gun, Fukushima 969-3431 (JP)

• TAKAYAMA,Kouichi
Cabot Supermetals 111AzaNagayachi
Kawanuma-gun, Fukushima 969-3431 (JP)
• ODA, Yukio,
Cabot Supermetals K.K.111,AzaNagayachi
Kawanuma-gun, Fukushima 969-3431 (JP)

(74) Representative: Grünecker, Kinkeldey,
Stockmair & Schwanhäusser Anwaltssozietät
Maximilianstrasse 58
80538 München (DE)

### (54) NIOBIUM POWDER, PROCESS FOR PRODUCING THE SAME AND SOLID ELECTROLYTIC CAPACITOR THEREFROM

(57) A niobium powder can be used to manufacture a niobium capacitor of excellent electrical properties. The niobium powder when formed into a sintered body of 3.15 to 3.9 g/cm$^3$ density exhibits a capacitance (CV value at a formation voltage of 20V) ranging from 80 to 240 kCV/g and a CV retention of 57% or higher. With respect to the production of the niobium powder, the employed potassium niobate fluoride has a water content of 1000 ppm or less as determined from the amount of water generated upon heating at 600°C according to the Karl Fischer method.

## EP 1 561 531 A1

**Description**

Technical Field

The present invention relates to niobium powder, processes for producing the niobium powder, and solid electrolytic capacitors using the niobium powder.

The present invention is based on Japanese Patent Application No. 2002-306725, the content of which is incorporated herein by reference.

Background Art

Tantalum capacitors are known as small solid capacitors having high capacity, and the use thereof has greatly increased, mainly for portable information terminals and mobile phones. Tantalum powder which is used as a raw material for anodes thereof may be obtained by reducing potassium tantalate fluoride. However, since supply of ore which is used as a raw material for potassium tantalate fluoride is unstable, solid capacitors using niobium powder which possesses properties close to tantalum powder and supply of raw materials thereof is stable, have been developed.

As a method for producing the niobium powder, the same methods of producing tantalum powder were considered to be effective since it does not require new facilities, etc. Such methods include, for example, reducing a metallic salt containing tantalum, such as potassium tantalate fluoride, in a diluent salt to produce tantalum powder (a reduction method).

However, in the above method, there is a problem that a large number of impurities may be incorporated in crystals of metallic salt including niobium, such as potassium niobate fluoride, since the crystals are unstable unlike those of potassium tantalate fluoride, during a reducing reaction in which an apparatus may be seriously corroded.

On the other hand, examples of the methods, other than the reduction method, include an oxide reduction method and a pulverization method. Metallic powder obtained by these methods has less contamination by impurities compared to the metallic powder obtained by the reduction method. In particular, powder having high purity may be obtained by the oxide reduction method (refer to Japanese Unexamined Patent Application, First Publication No. Sho 62-278210).

However, the grain density of the powder obtained by the oxide reduction method is large and the distance between the crystal particles is short. Accordingly, there is a problem that fine pores thereof are clogged due to the growth of oxidation film when formed using a high voltage, and the reduction of CV value due to high voltage formation becomes large.

Also, when the pulverization method is employed, coral like secondary particles of powder which may be produced by the above-mentioned reduction method cannot be obtained. Accordingly, it is difficult to produce porous (thermal) agglomerate which controls the pore size distribution of a sintered body.

Disclosure of Invention

The inventors of the present invention, after performing diligently studies on high purification of crystals using the reduction method, have found that high purity niobium powder may be obtained by removing the effect of water content in potassium niobate fluoride or by improving a method for adding a reducing agent. Also, the inventors of the present invention have found that the niobium powder obtained by the method has properties that pores thereof are not clogged even When formed using a relatively high voltage and the production of a niobium capacitor having excellent electrical properties becomes possible, and completed the invention.

That is, the niobium powder of the present invention has a capacitance (CV value at a formation voltage of 20V) ranging from 80 to 240 kCV/g and a CV retention of 57% or higher when formed into a sintered body of 3.15 to 3.9 g/cm$^3$ density.

Also, it is preferable that the capacitance range from 80 to 120 kCV/g and the CV retention be 84% or higher.

Moreover, it is preferable that the capacitance range from 120 to 160 kCV/g and the CV retention be 73% or higher.

Furthermore, it is preferable that the capacitance range from 160 to 240 kCV/g and the CV retention be 57% or higher.

In addition, it is preferable that the percentage of pores having a diameter of 0.11 $\mu$m or greater, measured by mercury porosimetry, with respect to all pores present in the sintered body be 90 vol% or greater.

Also, in the niobium powder, it is preferable that the total amount of nickel, iron and chromium be 100 ppm or less and the total amount of sodium, potassium and magnesium be 100 ppm or less.

The method of producing niobium powder according to the present invention includes the step of: reducing potassium niobate fluoride in a diluent salt to produce niobium powder, wherein the potassium niobate fluoride has a water content of 1000 ppm or less as determined from an amount of water generated upon heating at 600°C according to the Karl Fischer method.

Also, it is preferable that the diluent salt is potassium fluoride having a water content of 500 ppm or less as determined from an amount of water generated upon heating at 700°C according to the Karl Fischer method.

Moreover, it is preferable that the amount of water in the reduction reaction system be adjusted to 9300 ppm or less with respect to the niobium powder produced.

The method of producing niobium powder by reducing potassium niobate in a diluent salt to produce niobium powder according to the present invention includes the steps of: introducing I to 20% of stoichiometric equivalence of a reducing agent in a reduction reaction into a reaction vessel in advance, and subsequently adding a predetermined amount (reaction equivalent) of potassium niobate fluoride and the reducing agent, in that order, and repeating this process to carry out a reaction

The sintered body of the present invention is characterized by being formed from the niobium powder described above.

The anode for capacitor according to the present invention is formed from the niobium powder described above and is characterized by having a relative leakage current value (Wet measurement value) of 4 nA/CV or less.

The niobium capacitor of the present invention is characterized by having the above-mentioned anode for capacitor.

Brief Description of the Drawing

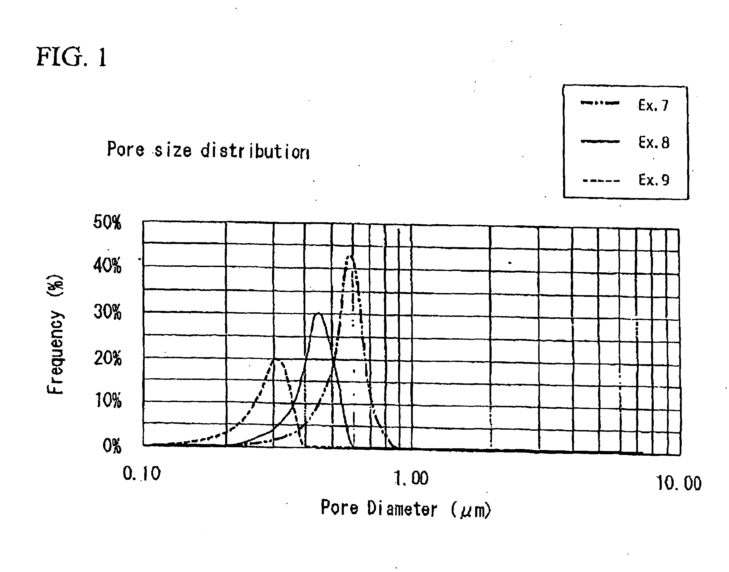

FIG. 1 is a graph showing pore size distribution in a simered pellet obtained in Examples 7-9.

Best Mode for Carrying Out the Invention

The niobium powder of the present invention when formed into a sintered body of 3.15 to 3.9 g/cm$^3$ density exhibits a capacitance (CV value at a formation voltage of 20V) ranging from 80 to 240 kCV/g and a CV retention of 57% or higher. That is, the niobium powder of the present invention is suitable as a material for a capacitor in which the reduction of CV value thereof is suppressed even when formed using a relatively high voltage, for example 50V, after being formed as a sintered body. If the CV retention is less than 57%, lowering in the CV value when formed using a formation voltage of 50V becomes too large, and this is not preferable.

Note that in the present specification the term "CV value" when it is simply so described means a CV value at a formation voltage of 20V, and the "CV retention" is calculated using the following mathematical formula (I):

$$\text{CV retention (\%)} = \frac{\text{capacitance when formation voltage is 50 V (CV50V)}}{\text{capacitance when formation voltage is 50 V (CV50V)}} \times 100 \text{ (I)}$$

capacitance when formation voltage is 20 V (CV20V) 100 (I) ,

It is preferable that the percentage of pores having a diameter of 0.11 μm or more measured by Mercury Porosimetry with respect to the total pore present when The niobium powder of the present invention is formed into a sintered body be 90 vol% or greater. By controlling the pore size distribution as described above, it becomes possible to obtain a high CV value and a high CV retention even when formed using a relatively high voltage, such as 50V, comparing to niobium powder obtained using the oxide reduction method. That is, although the CV value of conventional niobium powder decreases when formed using a high voltage since pores tend to be clogged, it is important to control the pore size distribution thereof, especially for metallic powder having pores of 1 μm or less, in order to avoid the lowering of CV value associated with the formation under high voltage.

Also, the thickness of oxidation film of niobium relative to the formation voltage (formation coefficient) is larger than that of tantalum. Since pores tend to be clogged and there is a danger that the CV value is lowered as the thickness of oxidation film increases, it is important to control the pore size distribution in order to achieve a high CV retention of a sintered body obtained from the niobium powder.

Hereinafter, the pore size distribution of the niobium powder of the present invention when formed into a sintered body of 3.15 to 3.9 g/cm$^3$ density will be described in detail for three kinds of capacitance (CV value at a formation voltage of 20V) ranging from 80 to 120 kCV/g, 120 to 160 kCV/g, and 160 to 240 kCV/g.

For the case where the CV value is 80 to 120 kCV/g, it is preferable that the CV retention thereof be 84% or higher. In order to achieve such value of CV retention, it is preferable to control the pore size distribution so that 90 vol% or more of pores have a diameter of 0.27 μm or greater and the peak value thereof is within the range between 0.73 to 0.43 μm.

For the case where the CV value is 120 to 160 kCV/g, it is preferable that the CV retention thereof be 75% or higher. In order to achieve such value of CV retention, it is preferable to control the pore size distribution so that 90 vol% or more of pores have a diameter of 0.22 μm or greater and the peak value thereof is within the range between 0.58 to 0.29 μm.

For the case where the CV value is 160 to 240 kCV/g, it is preferable that the CV retention thereof be 57% or higher. In order to achieve such a value of CV retention, it is preferable to control the pore size distribution so that 90 vol% or more of pores have a diameter of 0.11 μm or greater and the peak value thereof is within the range between 0.39 to 0.11 μm.

Also, it is preferable that the niobium powder of the present invention have the total amount of nickel, iron and chromiwn of 100 ppm or less and the total amount of sodium, potassium and magnesium of 100 ppm or less. By using such niobium powder having low levels of contamination by impurities, it becomes possible to produce a capacitor having excellent electrical properties.

As a method for producing the above-mentioned niobium powder, potassium niobate fluoride having a water content of 1000 ppm or less, which is determined from the amount of water generated upon heating at 600°C according to the Karl Fischer method, is used as a raw material, and this is reduced in a diluent salt to produce niobium powder. For instance, a diluent salt is placed in a reaction vessel whose inner surface is made of a nickel material. After the temperature thereof reaches a reaction temperature, a predetermined amount of a reducing agent and potassium niobate fluoride having a water content of 1000 ppm or less are added in that order and this is repeated to conduct a reduction reaction. In this manner, niobium powder is produced (a reverse rotation method).

If the potassium niobate fluoride has a water content of more than 1000 ppm, the water content reacts with the reaction vessel, and there is a danger that impurities derived from the reaction vessel, such as nickel, iron, and chromium, contaminate the product. Accordingly, if such niobium powder is used for an anode of a capacitor, the performance thereof will be reduced.

Note that the Karl Fischer method is a method used for obtaining an amount of water using a Karl Fischer agent which is a quantitative determination agent for water. The Karl Fischer agent is an agent in which iodine, sulfur dioxide and pyridine are mixed in a ratio of $I_2 : SO_2$ : pyridine = 1 : 3: 10 (molar ratio). By using the characteristic of the agent that 1 mole of $I_2$ reacts with 1 mole of $H_2O$, the amount of water in a sample solution, such as an alcohol solution in which water is dissolved, can be accurately determined by titration using the Karl Fischer agent.

The endpoint of the titration may be confirmed by, other than visual confirmation, a titration method using potential difference between different metals, a titration method using constant-voltage polarization current, and so forth.

The amount of water contained in potassium niobate fluoride may be reduced by adding potassium chloride during a synthetic process of potassium niobate fluoride, i.e., to a hydrogen fluoride solution of niobium, to appropriately adjust the concentration of hydrogen fluoride used for synthesizing potassium niobate fluoride,

Also, although water contained in potassium niobate fluoride thus obtained is removed when the temperature thereof increases by heating in an atmosphere, it is not appropriate as a raw material if the temperature at that time exceeds 190°C since oxygen will be incorporated therein. For this reason, water may be removed while maintaining crystal stability by drying at a temperature below 190°C.

Moreover, it is preferable to adapt heat-drying under reduced pressure. For example, potassium niobate fluoride having a water content which is further reduced may be obtained by heat-drying at about 100°C under a reduced pressure of 2 kPa or less in a vacuum vessel to which a Teflon (registered trademark) lining is applied.

Examples of the diluent salt used in the method of producing the niobium powder of the present invention include potassium fluoride, potassium chloride, sodium chloride, and mixtures thereof. Also, when potassium fluoride is used as the diluent salt, it is preferable that the water content thereof be 500 ppm or less as determined from the amount of water generated upon heating at 700°C according to the Karl Fischer method. If potassium fluoride has a water content greater than 500 ppm, there is a danger that impurities, such as nickel, iron and chromium, may be introduced for the reasons described above. Accordingly, if this is used as a raw material for an anode, the performance of the capacitor will be reduced.

Also, KF · 2H₂O, which is produced in the process of producing potassium fluoride, is reacted as shown in the formula below, and hydrogen fluoride is generated. Accordingly, when potassium fluoride is used as a diluent salt, it becomes possible to decrease the amount of water contained as crystal water by improving the precipitation conditions under which potassium fluoride is synthesized and the drying condition in consideration of the hydrogen fluoride generated.

$$KF . 2H_2O \rightarrow KF + 2H_2O$$

$$H_2O + 2KF \rightarrow K_2O + 2HF \ (500°C)$$

Moreover, water content of potassium fluoride thus obtained may be reduced to 500 ppm or less by increasing the temperature up to about 130°C while supplying air.

Furthermore, it is preferable that the amount of water in the reaction system of the reduction reaction be controlled so as to be 9300 ppm or less with respect to the niobium powder obtained. By controlling the amount of water in the reaction system as described above, it becomes possible to obtain niobium powder having few impurities which is suitable as a raw material for a capacitor.

Examples of the reducing agents used in the method of producing niobium powder according to the present invention include alkali metals, such as sodium and potassium; alkaline-earth metals; and hydrides thereof. Also, methods of adding the reducing agent are not particularly limited, and examples thereof include a method in which a predetermined amount of potassium niobate fluoride, which is a raw material, and a reducing agent are added in that order and this precede is repeated (normal rotation method), and a method in which a predetermined amount of a reducing agent and potassium niobate fluoride are added in that order and this process is repeated (reverse rotation method).

Also, as a method for producing niobium powder other than those mentioned above, there is a method in which a reducing agent of 1 to 20%, preferably 5 to 15%, relative to stoichiometric equivalence in the reduction reaction is introduced into a reaction vessel in advance, and then a predetermined amount (reaction equivalent) of potassium niobate fluoride and the reducing agent are added in that order, and this process is repeated (half-reverse rotation method).

For example, a diluent salt is placed in a reaction vessel whose inner surface is formed of a nickel material, and a reducing agent of an amount of 10% of stoichiometric equivalence in the reduction reaction is added after increasing the temperature to a reaction temperature. Then, a reduction reaction is earned out by adding a predetermined amount of potassium niobate fluoride and the reducing agent in that order and repeating this procedure to obtain niobium powder.

According to the above method of producing niobium powder, it becomes possible to obtain niobium powder which is suitable as a raw material for a capacitor in which contamination by heavy metal impurities derived from the reaction vessel, such as iron, chromium and nickel, is at a low level and increase in an amount of alkali metals. such as sodium and potassium, which is observed in the reverse rotation method, is suppressed without carrying out a pretreatment in which the amount of water contained in potassium niobate fluoride, which becomes a raw material, is reduced in advance as in the normal rotation method. Note that specific examples of the diluent salts and reducing agents used in the half-revetse rotation method include the same salts and agents as described above.

The niobium powder obtained as above is subjected to pretreatment processes, such as thermal aggregation, deoxidation and gradual oxidation stabilization, and after the powder is molded by, for instance, press molding, this is sintered to produce a sintered body.

The thermal aggregation process is carried out to obtain secondary particles having a relatively large particle size by heating the niobium powder to be Aggregated. This process is normally conducted at a temperature of 800 to 1400°C under vacuum for about 0.5 to 2 hours. Prior to the thermal aggregation process, it is possible to carry out a pre-aggregation process in which water of an amount sufficient for uniformly wetting the entire powder or an aqueous solution containing phosphorus or boron is added while vibrating the niobium powder.

After a cakelike powder obtained by the thermal aggregation process is pulverized in air or an inert gas, a reducing agent, such as magnesium, is added. Then, the deoxidation process in which oxygen present in the particle is reacted with the reducing agent and a subsequent gradual oxidation stabilization process in which air is introduced into an inert gas while it is being cooled to gradually oxidize and stabilize niobium powder are carried out. After this, substances derived from the reducing agent, such as magnesium and magnesium oxide, remaining in the powder are removed by acid cleaning.

After this, about 3 to 5% by mass of camphor ($C_{10}H_{16}O$), etc., as a binder, is added to the niobium powder subjected to the thermal aggregation, deoxidation, and gradual oxidation stabilization processes as described above, and this is press-molded. Thaeafter, the mold is heated to a temperature of 1000 to 1400°C for 0.3 to 1 hour to form a sintered body.

when this porous sintered body is used as an anode, a wire is embedded in the powder in advance and then this is press-molded and sintered so that the wire is integrated. Then, this is oxidized while being formed to produce an anode for solid electrolytic capacitor.

The anode thus obtained has a small relative leakage current (Wet value) of 4 nA/CV or less, and hence, may be suitably used as an anode plate for an electrolytic capacitor.

In addition, a solid electrolytic layer including magnesium dioxide, lead oxide, conductive polymer, etc., a graphite layer, and a silver paste layer may be formed on the porous sintered body, in that order, using any known method. Thereafter a negative terminal may be connected thereto using solder and covered by a resin to produce a solid capacitor.

Examples:

Hereinafter, the present invention will be described with examples.

(Example 1)

A predetermined amount of potassium fluoride and potassium chloride as diluent salts were introduced into a reaction vessel whose inner surface was formed of nickel material, and it was heated to a reaction temperature. After this, a predetermined amount of potassium niobate fluoride and sodium were added in that order and this process was repeated to conduct a reduction reaction. In this manner, niobium powder was obtained.
The employed potassium niobate fluoride had a water content of 4000 ppm as determined based on the Karl Fischer method upon heating to 600°C.
Also, the water content of potassium fluoride and potassium chloride was 500 ppm and 50 ppm, respectively, as determined based on the Karl Fischer method upon heating to 700°C.
Moreover, the amount of water in the reaction system of the reduction reaction was 16100 ppm converted to the amount of niobium powder obtained.
The niobium powder thus obtained was subjected to post-processes, and as a result, 150 ppm of only nickel was found as an impurity.

(Example 2)

A predetermined amount of potassium fluoride and potassium chloride as diluent salts were introduced into a reaction vessel whose inner surface was formed of nickel material, and it was heated to a reaction temperature. After this, a predetermined amount of potassium niobate fluoride and sodium were added in that order and this process was repeated to conduct a reduction reaction. In this manner, niobium powder was obtained.
The employed potassium niobate fluoride had a water content of 1000 ppm as determined based on the Karl Fischer method upon heating to 600°C.
Also, the water content of potassium fluoride and potassium chloride was 1000 ppm and 50 ppm, respectively, as determined based on the Karl Fischer method upon heating to 700°C.
Moreover, the amount of water in the reaction system of the reduction reaction was 14700 ppm converted to the amount of niobium powder obtained.
The niobium powder thus obtained was subjected to post-processes, and as a result, 125 ppm of only nickel was found as an impurity.

(Example 3)

A predetermined amount of potassium fluoride and potassium chloride as diluent salts were introduced into a reaction vessel whose inner surface was formed of nickel material, and it was heated to a reaction temperature. After this, a predetermined amount of potassium niobate fluoride and sodium were added in that order and this process was repeated to conduct a reduction reaction. In this manner, niobium powder was obtained.
The employed potassium niobate fluoride had been heat-dried at about 100°C under a reduced pressure of 2 kPa in a vessel to which a Teflon (registered trademark) lining was applied in advance, and it was introduced into the reaction vessel without being exposed in air. The water content of potassium niobate fluoride subjected to the heat-drying process under a reduced pressure was 1000 ppm as determined based on the Karl Fischer method upon heating to 600°C.
Also, the water content of potassium fluoride and potassium chloride used as diluent salts was 500 ppm and 50 ppm, respectively, as determined based on the Karl Fischer method upon heating to 700°C.
Moreover, potassium niobate fluoride was supplied so that the amount of water in the reaction system of the reduction reaction be 9300 ppm converted to the amount of niobium powder obtained.
The niobium powder thus obtained was subjected to post-processes, and as a result, the total amount of iron, chromium and nickel impurities was 60 ppm and the total amount of sodium, potassium and magnesium impurities was 50 ppm.

(Example 4)

A predetermined amount of potassium fluoride and potassium chloride as diluent salts were introduced into a reaction vessel whose inner surface was formed of nickel material, and it was heated to a reaction temperature. Prior to adding a predetermined amount of potassium niobate fluoride, 5% of stoichiometric equivalence of sodium in a reduction reaction was supplied. Then, a predetermined amount of potassium niobate fluoride and sodium were added in that order and this process was repeated to conduct the reduction reaction. In this manner, niobium powder was obtained.

The employed potassium niobate fluoride had a water content of 4000 ppm as determined based on the Karl Fischer method upon beating to 600°C.

Also, the water content of potassium fluoride and potassium chloride used as diluents was 500 ppm and 50 ppm, respectively, as determined based on the Karl Fischer method upon heating to 700°C.

Moreover, potassium niobate fluoride was supplied so that the amount of water in the reaction system of the reduction reaction be 16100 ppm converted to the amount of niobium powder obtained.

The niobium powder thus obtained was subjected to post-processes, and as a result, the total amount of iron, chromium and nickel impurities was 60 ppm and the total amount of sodium, potassium and magnesium impurities was a)so 60 ppm.

(Example 5)

A predetermined amount of potassium fluoride and potassium chloride as diluent salts were introduced into a reaction vessel whose inner surface was formed of nickel material, and it was heated to a reaction temperature. After this, a predetermined amount of potassium niobate fluoride and sodium were added in that order and this process was repeated to conduct a reduction reaction. In this manner, niobium powder was obtained.

The employed potassium niobate fluoride had a water content of 1000 ppm as determined based on the Karl Fischer method upon heating to 600°C by appropriately adjusting a drying method during a synthesizing process.

Also, the water content of potassium fluoride and potassium chloride used as diluents was 500 ppm and 50 ppm, respectively, as determined based on the Karl Fischer method upon heating to 700°C.

Moreover, potassium niobate fluoride was supplied so that the amount of water in the reaction system of the reduction reaction be 9300 ppm converted to the amount of niobium powder obtained.

The niobium powder thus obtained was subjected to post-processes, and as a result, the total amount of iron, chromium and nickel impurities was 60 ppm and the total amount of sodium, potassium and magnesium impurities was 50 ppm.

(Example 6)

A predetermined amount of potassium fluoride and potassium chloride as diluent salts were introduced into a reaction vessel whose inner surface was formed of nickel material, and it was heated to a reaction temperature. Prior to adding a predetermined amount of potassium niobate fluoride, 5% of stoichiomeitic equivalence of sodium in a reduction reaction was supplied. Then, a predetermined amount of potassium niobate fluoride and sodium were added in that order and this process was repeated to conduct the reduction reaction. In this manner, niobium powder was obtained.

The employed potassium niobate fluoride had been heat-dried at about 100°C under a reduced pressure of 2 kPa in a vessel to which a Teflon (registered trademark) lining was applied in advance, and it was introduced into the reaction vessel without being exposed in air. The water content of potassium niobate fluoride subjected to the heat-drying process under a reduced pressure was 1000 ppm as determined based on the Karl Fischer method upon heating to 600°C.

Also, the water content of potassium fluoride and potassium chloride used as diluent salts was 500 ppm and 50 ppm, respectively, as determined based on the karl Fischer method upon heating to 700°C.

Moreover, potassium niobate fluoride was supplied so that the amount of water in the reaction system of the reduction reaction be 9300 ppm converted to the amount of niobium powder obtained.

The niobium powder thus obtained was subjected to post-processes, and as a result, the total amount of iron, chromium and nickel impurities was 50 ppm and the total amount of sodium, potassium and magnesium impurities was also 50 ppm.

In Example 1, since potassium niobate fluoride having a water content exceeding 1000 ppm was used as the raw material, the amount of nickel impurity contained in the niobium powder obtained was too large to be **a** suitable raw material for a capacitor.

In Example 2, since potassium niobate fluoride having a water content exceeding 1000 ppm was used as the raw material, although the amount of nickel impurity contained in the niobium powder obtained was smaller than that of the niobium powder obtained in Example 1. the powder was not suitable as a raw material for a capacitor due to high water content of potassium fluoride used as the diluent salt.

In Example 3, since potassium niobate fluoride having a reduced water content and the diluent salt having a small water content were used, the niobium powder obtained had few impurities and was suitable as a raw material for a capacitor.

In Example 4, although potassium niobate fluoride having a water content exceeding 1000 ppm was used, the niobium powder obtained had few impurities and was suitable as a raw material for a capacitor since the potassium niobate fluoride first incremental reduction adding a part of sodium at first step was used as the reducing method thereof.

In Example 5, since the drying process during synthesizing potassium niobate fluoride was appropriately adjusted so that potassium niobate fluoride having a reduced water content and the diulent having a small water content were used, the niobium powder obtained had few impurities and was suitable as a raw material for a capacitor.

In Example 6, since potassium niobate fluoride having a reduced water content and the diulent having a small water content were used and also the potassium niobate fluoride first incremental reduction adding a part of sodium at first step was used as the reduction method, the niobium powder obtained had fewer impurities than those obtained in Examples 3-5 and was suitable as a raw material for a capacitor.

(Example 7)

In a reaction vessel whose inner surface was formed of nickel material, 20 kg of potassium fluoride and potassium chloride, respectively, as diluent salts, were introduced, and after the temperature thereof increased to 850°C, 10 g of sodium was supplied.

Then, 260 g of potassium niobate fluoride and 100 g of sodium were added under nitrogen atmosphere in that order and this process was repeated to conduct the reduction reaction. In this manner, niobium powder was obtained. Note that the employed potassium niobate fluoride had been heat-dried at about 100°C under a reduced pressure of 2 kPa in a vessel to which a Teflon (registered trademark) lining was applied, and was introduced into the reaction vessel without being exposed to air

The water content of potassium niobate fluoride subjected to the heat-drying process under reduced pressure was 1000 ppm as determined based on the Karl Fischer method upon heating to 600°C. Also, the water content of potassium fluoride and potassium chloride used as diluent salts was 250 ppm and 50 ppm, respectively, as determined based on the Karl Fischer method upon heating to 700°C. The total amount of potassium niobate fluoride supplied was 12 kg and the amount of water in the reaction system was adjusted to be 4900 ppm converted to the amount of niobium powder obtained.

After the niobium powder thus obtained was subjected to a vacuum-heacng process at 1200°C, a deoxidation process was carried out. The BET specific surface area, and the amount of impurities of iron, chromium, nickel, sodium, potassium, and magnesium of the niobium powder obtained are shown in Table 1.

Table 1

|  | BET specific surface area ($m^2$/g) | Fe (ppm) | Cr (ppm) | Ni (ppm) | Na (ppm) | K (ppm) | Mg (ppm) |
|---|---|---|---|---|---|---|---|
| Example 7 | 1.15 | 5 | 8 | 12 | 2 | 8 | 12 |
| Example 8 | 1.61 | 14 | 21 | 13 | 2 | 17 | 1 |
| Example 9 | 2.35 | 5 | 26 | 5 | 8 | 43 | 1 |

When 0. 5 g of the niobium powder obtained in Example 7 was pressed at GD 3.0 g/cm$^3$ at 5.0 mm φ and sintered at 1200°C, sintered pellet having a density of 3.22 g/cm$^3$ was obtained.

Pore size distribution of the sintered pellet is shown in FIG. 1, and the CV value when formed at 20V, relative leakage current value, CV value when formed at 50V, and CV retention rate is shown in Table 2.

Table 2

|  | Capacitance (Formation voltage of 20V) | Relative leakage current value (nA/CV) | Capacitance (Formation voltage of 50V) | CV retention (%) |
|---|---|---|---|---|
| Example 7 | 104 kCV/g | 2.64 | 94 kCV/g | 90 |
| Example 8 | 133 kCV/g | 3 | 114 kCV/G | 86 |
| Example 9 | 104 kCV/g | 3.57 | 128 kCV/g | 76 |

Note that the measurement conditions were as follows.

(Pellet) 0.5 g × 5.0 mm φ GD = 3.0 g/cc

(Formation) 0.01 vol% $H_3PO_4$, 90°C, 120min, 60 mA/g

(Measurement) CV : 30.5 vol% $H_2SO_4$, 25°C, 120Hz, Bias 1.5V, LC : 10 vol% $H_3PO_4$, 25°C, 14.0 V, 3 min

(Example 8)

In a reaction vessel whose inner surface was Formed of nickel material, 25 kg of potassium fluoride and potassium chloride, respectively, as diluent salts, were introduced, and after the temperature thereof increased to 850°C, 10 g of sodium was supplied.

Then, 260 g of potassium niobate fluoride and 100 g of sodium were added under nitrogen atmosphere in that order and this process was repeated to conduct the reduction reaction. In this manner, niobium powder was obtained. Note that the employed potassium niobate fluoride had been heat-dried at about 100°C under a reduced pressure of 2 kPa in a vessel to which a Teflon (registered trademark) lining was applied, and was introduced into the reaction vessel without being exposed to air.

The water content of potassium niobate fluoride subjected to the heat-drying process under reduced pressure was 1000 ppm as determined based on the Karl Fischer method upon heating to 600°C. Also, the water content of potassium fluoride and potassium chloride used as diluent salts was 250 ppm and 50 ppm, respectively, as determined based on the Karl Fischer method upon heating to 700°C. The total amount of potassium niobate fluoride supplied was 6 kg, and the amount of water in the reaction system was adjusted to be 7400 ppm converted to the amount of niobium powder obtained.

After the niobium powder thus obtained was subjected to a vacuum-healing process at 1100°C, a deoxidation process was carried out. The BET specific surface area, and the amount of impurities of iron, chromium, nickel, sodium potassium, and magnesium of the niobium powder obtained are shown in Table 1.

When 0.5 g of the niobium powder obtained in Example 8 was pressed at GD 3.0 g/cm$^3$ at 5.0 mm φ and sintered at 1200°C, sintered pellet having a density of 3.37 g/cm$^3$ was obtained.

Pore size distribution of the sintered peller is shown in FIG. 1, and the CV value when formed at 20V, relative leakage current value, CV value when formed at 50V, and CV retention rate is shown in Table 2.

(Example 9)

In a reaction vessel whose inner surface was formed of nickel material, 4 kg of potassium fluoride and 36 kg of potassium chloride, as diluent salts, were introduced, and after the temperature thereof increased to 800°C, 10 g of sodium was supplied.

Then, 260 g of potassium niobate fluoride and 100 g of sodium were added under nitrogen atmosphere in that order and this process was repeated to conduct the reduction reaction. In this manner, niobium powder was obtained. Note that the employed potassium niobate fluoride had been heat-dried at about 100°C under a reduced pressure of 2 kPa in a vessel to which a Teflon (registered trademark) lining was applied, and was introduced into the reaction vessel without being exposed to air.

The water content of potassium niobate fluoride subjected to the heat-drying process under reduced pressure was 1000 ppm as determined based on the Karl Fischer method upon heating to 600°C. Also, the water content of potassium fluoride and potassium chloride used as diluent salts was 250 ppm and 50 ppm, respectively, as determined based on the Karl Fischer method upon heating to 700°C. The total amount of potassium niobate fluoride supplied was 12 kg, and the amount of water in the reaction system was adjusted to be 4000 ppm converted to the amount of niobium powder obtained.

After the niobium powder thus obtained was subjected to a vacuum-heating process at 1100°C, a deoxidation process was carried out. The BET specific surface area, and the amount of impurities of iron, chromium, nickel, sodium, potassium, and magnesium of the niobium powder obtained are shown in Table 1.

When 0. 5 g of the niobium powder obtained in Example 9 was pressed at GD 3.0 g/cm$^3$ at 5.0 mm φ and sintered at 1200°C, sintered pellet having a density of 3.57 g/cm$^3$ was obtained.

Pore size distribution of the sintered pellet is shown in FIG. 1, and the CV value when formed at 20V, relative leakage current value, CV value when formed at 50V, and CV retention rate is shown in Table 2.

All of the niobium powder obtained in Examples 7-9 had few impurities and were suitable as a raw material for a capacitor.

Also, it was found that the niobium powder of Example 7, when it was formed into a entered body, had excellent electrical properties of a capacitance of 104 kCV/g at a formation voltage of 20V and a CV retention of 90% (> 84%).

Moreover, it was found that the niobium powder of Example 8, when it was formed into a sintered body, had excellent electrical properties of a capacitance of 133 kCV/g at a formation voltage of 20V and a CV retention of 86% (> 75%).

Furthermore, it was found that the niobium powder of Example 9, when it was formed into a sintered body, had excellent electrical properties of a capacitance of 169 kCV/g at a formation voltage of 20V and a CV retention of 76% (> 57%).

Industrial Applicability

According to the method for producing niobium powder of the present invention, it becomes possible to niobium powder of high purity having few impurities by eliminating effect of water contained in potassium niobate fluoride, or by adding 1-20% of stoichiometric equivalence of a reducing agent in a reaction vessel in advance.

Also, since it is possible to control the pore size distribution of the sintered body which may be formed from the niobium powder, the pores will not be clogged when formed at a high voltage, and the CV value at a formation voltage of 20V and the CV retention becomes 80 to 240 kCV and 57% or higher, respectively.

Accordingly, a niobium capacitor which is formed from the niobium powder of the present invention has excellent electrical properties and extremely beneficial for industry.

**Claims**

1. Niobium powder which has a capacitance (CV value at a formation voltage of 20V) ranging from 80 to 240 kCV/g and a CV retention of 57% or higher when formed into a sintered body of 3.15 to 3.9 g/cm$^3$ density.

2. The niobium powder according to claim 1, wherein the capacitance ranges from 80 to 120 kCV/g and the CV retention is 84% or higher.

3. The niobium powder according fo claim 1, wherein the capacitance ranges from 120 to 160 kCV/g and the CV retention is 75% or higher.

4. The niobium powder according to claim 1, wherein the capacitance ranges from 160 to 240 kCV/g and the CV retention is 57% or higher.

5. The niobium powder according to any one of claims 1-4, wherein a percentage of pore having a diameter of 0.11 μm or greater, measured by mercury porosimetry, with respect to all pores present in the sintered body is 90 vol% or greater.

6. The niobium powder according to any one of claims 1-5, wherein a total amount of nickel, iron and chromium contained is 100 ppm or less, and a total amount of sodium, potassium and magnesium contained is 100 ppm or less.

7. A method of producing niobium powder, comprising the step of:

    reducing potassium niobate fluoride in a diluent salt to produce niobium powder,

    wherein
    the potassium niobate fluoride has a water content of 1000 ppm or less as determined from an amount of water generated upon heating at 600°C according to the Karl Fischer method.

8. The method of producing niobium powder according to claim 7, wherein the diluent salt is potassium fluoride having a water content of 500 ppm or less as determined from an amount of water generated upon heating at 700°C according to the Karl Fischer method.

9. The method of producing niobium powder according to claim 7 or 8, wherein an amount of water in a reaction system of the reducing step is adjusted to be 9300 ppm or less with respect to the niobium powder produced

10. A method of producing niobium powder by reducing potassium niobate fluoride in a diluent salt to produce niobium powder, comprising the steps of:

introducing 1 to 20% of stoichiometric equivalence of a reducing agent in a reduction reaction into a reaction vessel in advance, and
adding a predetermined amount (reaction equivalent) of potassium niobate fluoride and the reducing agent, in that order, and repeating this process to carry out a reaction.

11. A sintered body which is formed from the niobium powder as defined in any one of claims 1-6.

12. An anode for a capacitor which is formed from the niobium powder as defined in any one of claims 1-6 having a relative leakage current value (Wet value) of 4 nA/CV or less.

13. A solid electrolytic capacitor, comprising an anode for a capacitor as defined in claim 12.

FIG. 1

Pore size distribution

EP 1 561 531 A1

## INTERNATIONAL SEARCH REPORT

| International application No. |
|---|
| PCT/JP03/13491 |

**A. CLASSIFICATION OF SUBJECT MATTER**
Int.Cl$^7$ B22F9/24

According to International Patent Classification (IPC) or to both national classification and IPC

**B. FIELDS SEARCHED**

Minimum documentation searched (classification system followed by classification symbols)
Int.Cl$^7$ B22F9/24

Documentation searched other than minimum documentation to the extent that such documents are included in the fields searched
| | | | |
|---|---|---|---|
| Jitsuyo Shinan Koho | 1926–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | EP 1291100 A (Cabot Supermetals Kabushiki Kaisha), 31 May, 2001 (31.05.01), & JP 2001-345238 A | 1–13 |
| Y | US 5234491 A (Cabot Corp.), 10 August, 1993 (10.08.93), & JP 05-508686 A | 1–13 |

☐ Further documents are listed in the continuation of Box C. ☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 17 November, 2003 (17.11.03) | Date of mailing of the international search report <br> 02 December, 2003 (02.12.03) |
|---|---|
| Name and mailing address of the ISA/ <br> Japanese Patent Office | Authorized officer |
| Facsimile No. | Telephone No. |

Form PCT/ISA/210 (second sheet) (July 1998)

13